# EUROPÄISCHE PATENTANMELDUNG

(11) **EP 1 843 569 A1**
(43) Veröffentlichungstag der Anmeldung: **10.10.2007**
(21) Anmeldenummer: 07102459.0
(22) Anmeldetag: 15.02.2007
(51) Int. Cl.: H04N 1/32, H04N 1/00

(54) **Mobilfunkendgerät und Verfahren zur Übermittlung von digitalen Bildern**

(30) Priorität: 07.04.2006 DE 102006016868
(71) Anmelder: Vodafone Holding GmbH, 40027 Düsseldorf (DE)
(72) Erfinder: von Canstein, Bernhard, 81925, München (DE)
(74) Vertreter: Weisse, Renate

(57) **Zusammenfassung**

Die Erfindung betrifft ein Mobilfunkendgerät zur Kommunikation über ein Mobilfunknetz. Das Mobilfunkendgerät verfügt über eine Verarbeitungseinheit mit einem Speicher. Eine in das Mobilfunkendgerät integrierte digitale Fotokamera generiert digitale Fotos und/oder Filme, welche in dem Speicher der Verarbeitungseinheit gespeichert werden. Es sind Übertragungsmittel zum Austauschen der digitalen Fotos und/oder Filmen über das Mobilfunknetz vorgesehen. Durch eine ereignisgesteuerte Auslöseeinheit (31) werden die Übertragungsmittel veranlasst, die Fotos und/oder Filme an ein Empfangsgerät weiterzuleiten. Weiterhin betrifft die Erfindung ein entsprechendes Verfahren bei dem Fotos und/oder Filme ereignisgesteuert von dem Mobilfunkendgerät mit digitaler Kamera an ein Empfangsgerät übermittelt werden.

## Beschreibung

### Technisches Gebiet

Die Erfindung betrifft ein Mobilfunkendgerät zur Kommunikation über ein Mobilfunknetz, insbesondere nach dem GSM- und UMTS-Standard, enthaltend
a) eine prozessorgesteuerte Verarbeitungseinheit mit einem Speicher,
b) eine digitale Fotokamera, wobei digitale Fotos und/oder Filme, welche mit der Fotokamera generiert werden, in dem Speicher der Verarbeitungseinheit gespeichert werden,
c) Übertragungsmittel zum Austauschen von digitalen Fotos und/oder Filmen über das Mobilfunknetz.

Weiterhin betrifft die Erfindung ein Übermittlungsverfahren für ein Mobilfunkendgerät mit Fotokamera, zur Übermittlung von digitalen Fotos und/oder Filmen über ein Mobilfunknetz, insbesondere nach dem GSM- und UMTS-Standard, mit folgenden Verfahrensschritten:
a) Speichern der von der Fotokamera generierten Fotodaten in einem Datenspeicher, welcher im Mobilfunkendgerät angeordnet ist und
b) Übermitteln der Fotodaten an ein Empfangsgerät über das Mobilfunknetz.

### Stand der Technik

Mit Mobilfunkendgeräten können Mobilfunkteilnehmer über ein Mobilfunknetz kommunizieren. Dabei kann eine Verbindung zu wenigstens einem anderen Mobilfunkendgerät oder zu einem Festnetzanschluss hergestellt werden. Die Mobilfunknetze sind üblicherweise standardisiert und arbeiten beispielsweise nach dem GSM- oder UMTS-Standard (GSM= Globel System for Mobile communication; UMTS= Universal Mobile Telecommunications System). Die Mobilfunkendgeräte eignen sich mittlerweile nicht nur zur Kommunikation, sondern in ihnen sind zahlreiche weitere Funktionalitäten, wie z.B. Spiele, Uhr, Rechner, Kalender, Terminplaner, Adressbuch, Navigationsmodul oder digitale Kamera integriert. Die Liste der Funktionalitäten ist an dieser Stelle nicht abschließend. Es lassen sich beliebige Funktionen und Module mit bestimmten Funktionen in solche Mobilfunkendgeräte aufnehmen. Ein erforderlicher Datenaustausch mit anderen Geräten erfolgt ggf. neben einer Kabelverbindung und über das Mobilfunknetz oft über eine separate Infrarot- oder Bluetooth-Schnittstelle.

Die Mobilfunkendgeräte enthalten zur Durchführung der Funktionalitäten einen Prozessor und einen Arbeitsspeicher. Anfallende Daten, wie digitale Fotos oder Filme, die mit einer integrierten digitalen Kamera erzeugt wurden, werden in einem nichtflüchtigen Speicher abgelegt. Sie können bei Bedarf abgerufen oder über die genannten Schnittstellen an ein anderes Gerät übertragen werden. Sofern der nichtflüchtige Datenspeicher aus einer entfernbaren Speicherkarte besteht, kann diese auch in ein entsprechendes Lesegerät zur Übertragung von Daten eingesetzt werden.

Mobilfunkendgeräte werden mittlerweile praktisch nur noch mit digitaler Fotokamera ausgeliefert. Der Kunde fertigt damit zahlreiche Fotos an, welche im Mobilfunkendgerät gespeichert sind. Üblicherweise werden die Fotos auch nur mit dem Mobilfunkendgerät gezeigt. Eine weitere Verwertung findet meistens nicht statt, weil die Übertragung auf andere Geräte ziemlich umständlich ist. Sie werden daher auch nicht ausgedruckt.

Die europäische Patentschrift EP 1 133 104 B1 beschreibt jedoch die Übermittlung von Bilddaten über ein Netzwerk. Dabei werden die Bilddaten von einer mobilen Entität in ein Dienstsystem über eine mobile Funkinfrastruktur übertragen.

### Offenbarung der Erfindung

Aufgabe der Erfindung ist es daher, die Nachteile des Standes der Technik zu vermeiden und ein Mobilfunkendgerät mit digitaler Kamera so auszugestalten, dass es einem Anwender erleichtert wird, die mit der Fotokamera generierten digitalen Fotos und/oder Filme für weitere Mediengeräte zu nutzen. Ferner ist es Aufgabe der Erfindung, ein entsprechendes Verfahren zu schaffen, welches eine Weiternutzung von Fotos und/ oder Filmen für einen Mobilfunkendgerätenutzer vereinfacht.

Erfindungsgemäß wird die Aufgabe dadurch gelöst, dass bei einem Mobilfunkendgerät zur Kommunikation über ein Mobilfunknetz, insbesondere nach dem GSM- und UMTS-Standard der eingangs genannten Art
c) eine ereignisgesteuerte Auslöseeinheit, welche die Übertragungsmittel veranlasst, die digitalen Fotos und/oder Filme von dem Speicher der Verarbeitungseinheit über das Mobilfunknetz zu einem Empfangsgerät weiterzuleiten.

Die Aufgabe wird ferner durch ein Übermittlungsverfahren für ein Mobilfunkendgerät mit Fotokamera der eingangs genannten Art gelöst, bei dem
d) die Fotodaten ereignisgesteuert an das Empfangsgerät übermittelt werden.

Durch die ereignisgesteuerte Auslöseeinheit und das Übermittlungsverfahren kann die Übermittlung der digitalen Bild- und/oder Filmsequenzdaten vorgenommen werden, wenn ein zuvor festgelegtes Ereignis eintritt. Das Ereignis kann beispielsweise eine intern in dem Mobilfunkendgerät eingestellte Uhrzeit sein, aber auch eine Anforderung von einem externen Gerät. So kann z.B. ein Übermittlungszeitraum ausgewählt werden, in dem eine geringe Auslastung des Mobilfunknetzwerks vorliegt, um die Netzwerkressourcen zu schonen oder in dem ein besonders günstiger Tarif für eine Verbindung liegt. Der Anwender muss sich durch die ereignisgesteuerte Übermittlung nicht mehr um seine Bilddaten kümmern. Bild- und/oder Filmsequenzdaten werden automatisch, insbesondere zu einem gewünschten Zeitpunkt, Tarif oder bei einem vollem Bildspeicher, an ein externes Gerät über das Mobilfunknetz übertragen. Hierzu muss lediglich ein zuvor definiertes Ereignis eintreten.

Die Übermittlung kann dabei als externes Gerät auch von einem zentralen Server ausgelöst werden, der dazu ein entsprechendes Steuersignal an das Mobilfunkendgerät liefert. Die ereignisgesteuerte Auslöseeinheit reagiert auf dieses Steuersignal und veranlasst die Übertragungsmittel, die digitalen Fotos und/oder Filme von dem Speicher der Verarbeitungseinheit über das Mobilfunknetz zu einem Empfangsgerät weiterzuleiten. Die Übermittlung von Daten über das Mobilfunknetz erfolgt im GSM-Standard üblicherweise über eine GPRS-Verbindung (= General Packet Radio Service). Hierdurch können dem Anwender weitere Dienste zur Verfügung gestellt werden. Beispielsweise können die Bilddaten verwaltet oder ausgedruckt und/oder versandt werden.

In einer bevorzugten Ausgestaltung des erfindungsgemäßen Mobilfunkendgeräts zur Kommunikation über ein Mobilfunknetz ist das Empfangsgerät für die digitalen Fotos und/oder Filme als ein zentraler Server für die Fotoverwaltung ausgebildet. Der Server befindet sich dabei vorzugsweise als integraler Bestandteil im Mobilfunknetz. Er ist damit in der Lage, unmittelbar die über das Mobilfunknetz versendeten Bilddaten schnell zu empfangen und zu verarbeiten. Mit dem zentralen Server können dann Dienstleistungen, wie z.B. eine Fotoverwaltung oder ein Fotodruckservice angeboten werden. Dieser Server kann die Übermittlung der Daten ggf. auch selbst steuern. Immer wenn ausreichende Serverkapazität vorhanden ist, sendet der Server ein Steuersignal, welches die Übersendung der Bild- bzw. Filmdaten vom Mobilfunkendgerät veranlasst.

Gemäß einer bevorzugten Ausbildung des erfindungsgemäßen Mobilfunkendgeräts zur Kommunikation über ein Mobilfunknetz ist die Auslöseeinheit zum Senden der Fotodaten zeitgesteuert ausgebildet. So wird beispielsweise eine Übertragung zu günstigen Zeiten möglich, in denen das Mobilfunknetz nur relativ gering ausgelastet ist. Die Übertragung von Foto- oder Bilddaten belastet dadurch das Mobilfunknetz nicht unnötig und spart somit dessen Ressourcen.

In einer vorteilhaften Ausbildung des erfindungsgemäßen Mobilfunkendgerät zur Kommunikation über ein Mobilfunknetz ist ein Übermittlungsbegrenzer vorgesehen. Dieser begrenzt das Volumen und/oder die Anzahl der zu übertragenen Fotodaten bzw. Fotos. Die Übertragung von Daten über das Mobilfunknetz ist mit Kosten verbunden. Durch die vorgeschlagene Maßnahme werden daher die Kosten für den Mobilfunkteilnehmer auf ein festgelegtes Maß beschränkt. Außerdem kann durch eine Beschränkung des Volumens seitens des Mobilfunk-Betreibers auch eine übermäßige Belastung des Mobilfunknetzes vermieden werden.

Gemäß einer bevorzugten Ausgestaltung des Mobilfunkendgeräts zur Kommunikation über ein Mobilfunknetz wird die Auslöseeinheit tarifgesteuert, wobei die Fotodaten bei einem bestimmten Tarifwert übermittelt werden. Die Übertragung von Bilddaten wird nur zu einem gewünschten Tarif durchgeführt. Der Mobilfunkteilnehmer kann somit eine ausreichende Kostenkontrolle für die Datenübertragung vornehmen.

Bei einer weiteren vorteilhaften Ausbildung des Mobilfunkendgeräts zur Kommunikation über ein Mobilfunknetz enthält die Auslöseeinheit Fernsteuerungsmittel, worüber ein externes Fernsteuergerät die Auslöseeinheit über das Mobilfunknetz steuert. Wie bereits oben erläutert, kann ein Auslösesignal für die Auslösereinheit von einem externen Gerät herrühren. Das externe Gerät kann beispielsweise als zentraler Server ausgebildet sein, der ein Auslösesignal über das Mobilfunknetz an die Auslösereinheit des Mobilfunkendgeräts sendet. Das Auslösesignal kann dabei entsprechend wie das interne Auslösesignal beispielsweise durch einen in dem Server enthaltenen Zeitgeber ausgelöst werden. Durch das Fernsteuergerät lassen sich damit die Übermittlungen der Daten genau zu den gewünschten Zeiten verwirklichen. Dabei kann wahlweise der Mobilfunkbetreiber oder der Mobilfunkteilnehmer das Fernsteuergerät einstellen, wann das auslösende Signal gesendet werden soll.

Bei einer vorteilhaften Ausgestaltung des erfindungsgemäßen Übermittlungsverfahrens für ein Mobilfunkendgerät mit Fotokamera findet die Übermittlung der Fotodaten im MMS-Format (= Multimedia Messaging Service) statt. Das MMS-Format ist in allen gängigen Mobilfunknetzen nach dem GSM-Standard vorhanden. Damit lässt sich die Übertragung solcher Bild- und/oder Filmdaten leicht realisieren, da keine zusätzlichen Protokolle oder sonstige Vereinbarungen getroffen werden müssen. Dieses Format ermöglicht die schnelle und standardisierte Übermittlungen von Multimediadateien.

In einer weiteren besonders vorteilhaften Ausbildung des Übermittlungsverfahrens für ein Mobilfunkendgerät mit Fotokamera ist das Empfangsgerät für die digitalen Fotos ein zentraler Server, der die Fotos verwaltet und/oder weiterverarbeitet. Dem Anwender können durch diese Maßnahme weitere Fotodienste angeboten werden. So kann der Mobilfunkteilnehmer beispielsweise sämtliche Bilder oder Filme, welche er mit seiner digitalen Kamera aufgenommen hat, in dem zentralen Server archivieren. Ferner kann er die Fotos oder Filme über den zentralen Server sortieren, bearbeiten und sonstwie verwalten. Der Teilnehmer kann auch anderen Personen gestatten auf die zentral im Server verwalteten Daten zugreifen zu können, insbesondere z.B. über das Internet.

Eine vorteilhafte Ausgestaltung des erfindungsgemäßen Übermittlungsverfahrens für ein Mobilfunkendgerät mit Fotokamera ermöglicht eine zeitgesteuerte Übermittlung der Fotodaten. Wenn eingestellt werden kann, dass die Übermittlung der Bilddaten zu bestimmten Zeiten erfolgt, kann ein Übermittlungszeitraum ausgewählt werden, bei dem Ressourcen des Mobilfunknetzes geschont werden. Es kann auch ein Zeitraum ausgewählt werden, in dem der Mobilfunkteilnehmer das Mobilfunkendgerät nicht anderweitig, beispielsweise zum Telefonieren, benötigt.

In einer vorteilhaften Variante des Übermittlungsverfahrens für ein Mobilfunkendgerät mit Fotokamera wird die Auslösung zur Übermittlung der Fotodaten ferngesteuert. Die Übermittlung der Daten kann dabei zentral beispielsweise von einem Server veranlasst werden. Damit können die Daten automatisch, ohne dass der Anwender sich darum kümmern muss, auf einen Server übertragen werden. Der Anwender hat nun die Möglichkeit auf diese Daten z.B. mit seinem Personal Computer zuzugreifen. Der Server muss dazu lediglich mit dem Personal Computer vernetzt sein, beispielsweise über das Internet. Auf diese Weise kann der Anwender seine Fotos und/oder Filme bearbeiten und ggf. ausdrucken.

Gemäß einer Ausbildung des erfindungsgemäßen Übermittlungsverfahrens für ein Mobilfunkendgerät mit Fotokamera wird der Empfang von übermittelten Fotodaten mit einer Kurznachricht bestätigt. Der Anwender erhält nach jedem Übermittlungsvorgang zu seiner Sicherheit eine Empfangsbestätigung. Sobald der Anwender die Empfangsbestätigung erhalten hat, besteht für ihn die Möglichkeit Daten aus dem Datenspeicher des Mobilfunkendgeräts gefahrlos, d.h. ohne Datenverlust, zu löschen, denn die Fotos und/oder Filme befinden sich nun auf dem Empfangsgerät.

Weitere Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt in einer schematischen Prinzipskizze ein erstes Ausführungsbeispiel eines Mobilfunkendgeräts mit einer ereignisgesteuerten Auslöseeinheit, welche durch ein internes Signal gesteuert wird.
- Fig. 2: zeigt in einer schematischen Prinzipskizze ein zweites zur Fig. 1 entsprechendes Ausführungsbeispiel eines Mobilfunkendgeräts mit einer ereignisgesteuerten Auslöseeinheit, welche durch ein extern erzeugtes Signal gesteuert wird.

### Bevorzugte Ausführungsbeispiele

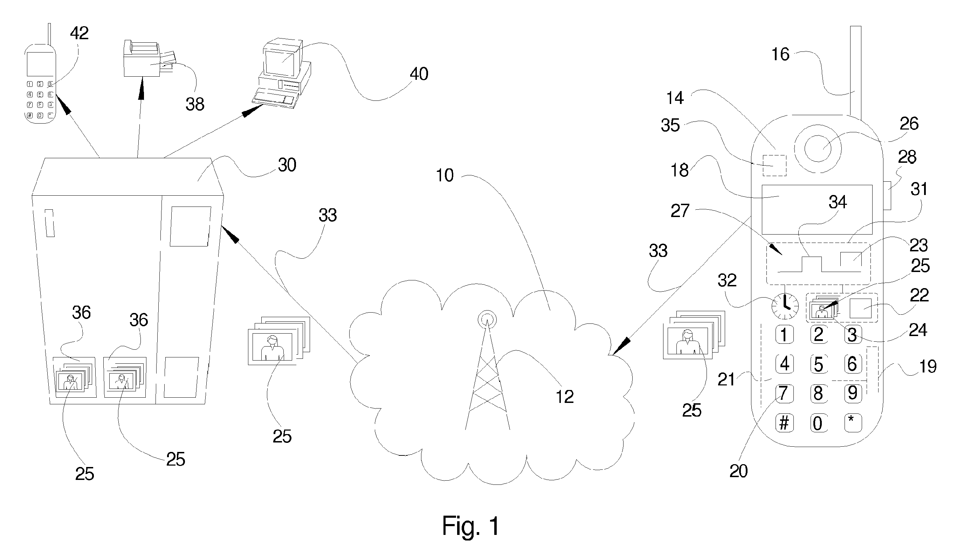

In Fig. 1 wird mit 10 ein Mobilfunknetz bezeichnet. Das Mobilfunknetz 10 enthält alle Bestandteile, die für ein Mobilfunknetz, beispielsweise nach dem GSM- oder UMTS-Standard, erforderlich sind. Mobilfunknetze nach dem GSM- und UMTS-Standard sind dem Fachmann geläufig und werden der Einfachheit halber nur durch eine Wolke mit einem darin enthaltenen Mast 12 stilisiert dargestellt. Mittels eines Mobilfunkendgerätes 14 können Mobilfunkteilnehmer über das Mobilfunknetz kommunizieren. Das Mobilfunkendgerät 14 enthält dazu eine geeignete Sende- und Empfangseinheit 16.

Das Mobilfunkendgerät 14 weist ferner eine Anzeige 18 auf, welche zur Darstellung von Nummern, Adressen oder Bedienermenüs zur Bedienung des Mobilfunkendgeräts 14 angezeigt werden. Die Steuerung des Mobilfunkendgeräts 14 erfolgt durch den Mobilfunkteilnehmer über Tastatur 20. Über die Tastatur 20 werden die gewünschten Menüs angesteuert oder sonstige Steuerungsbefehle zur Steuerung des Mobilfunkendgeräts 14 eingegeben. Außerdem können über die Tastatur 20 Telefonnummern oder Adressen eingegeben werden.

Daten, wie Adressen oder Telefonnummern, aber auch Programmdaten werden in einem Speicher 22 gespeichert. Ein Prozessor 23 kann zur Verarbeitung dieser Daten auf den Speicher 22 zugreifen. In einem nichtflüchtigen Bilddatenspeicher 24 werden Foto- und/oder Filmdaten 25, die mit einer im Mobilfunkendgerät 14 integrierten digitalen Kamera 26 erzeugt wurden, abgelegt. Als Verarbeitungseinheit 27 wird eine Einheit des Mobilfunkendgeräts 14 bezeichnet, die den Prozessor 23, den Speicher 22, sowie den nicht flüchtigen Bilddatenspeicher 24 enthält.

Ein Aufnahmeknopf 28 aktiviert die digitale Kamera 26. Die digitale Kamera 26 arbeitet üblicherweise mit Fotoempfindlichen Halbleiterchips, wie CCD-Elemente (=Charge-Coupled Device). Die Bilddaten 24 können dabei insbesondere auch in komprimierter Form zum Sparen von Speicherkapazität gespeichert sein.

Das Mobilfunkendgerät 14 besitzt weiterhin eine ereignisgesteuerte Auslöseeinheit 31. Die Auslöseeinheit 31 wird insbesondere durch den Prozessor 23 gesteuert. Bei einem eintretenden Ereignis veranlasst die Auslöseeinheit 31 die Übermittlung der Foto- und/oder Filmdaten 25 über das Mobilfunknetz 10. Die dabei zusammenwirkenden Prozessor 23, Speicher 22 bzw. Bilddatenspeicher 24 sowie die Sende- und Empfangseinheit 16 werden zusammengefasst als Übertragungsmittel 29 bezeichnet. Die Foto- und/oder Filmdaten 25 werden zur Übertragung von den Übertragungsmitteln 29 über das Mobilfunknetz 10 an einen zentralen Server 30 gesendet, Pfeile 33. Der Server 30 dient dabei als Empfangsgerät für die vom Mobilfunkendgerät 14 versendeten Foto- und/oder Filmdaten 25.

Ein solches internes Ereignis wird im vorliegenden Ausführungsbeispiel insbesondere von einem, in dem Mobilfunkendgerät 14 enthaltenen, Zeitgeber 32 generiert. Zu einer vorgebbaren Zeit erzeugt der Zeitgeber ein Signal 34. Die Zeit lässt sich dabei beispielsweise so einstellen, dass ein besonders günstiger Kommunikationstarif gilt. Es kann auch eine Zeit als auslösendes Ereignis ausgewählt werden, bei dem besonders geringe Auslastung des Mobilfunknetzes vorliegt. Dieses Signal 34 wird von der ereignisgesteuerten Auslöseeinheit 31 ausgewertet. Bei einem entsprechenden Resultat veranlasst anschließend die Auslöseeinheit 31, dass die Foto- und/oder Filmdaten 25 an den Server 30 übermittelt werden. Die Pfeile 33 deuten den Übertragungsweg an. Die Auslöseeinheit 31 wird somit durch das Signal 34 gesteuert, welches einem geeigneten Ereignis entspricht. Ein Volumenbegrenzer 35 kann derart eingestellt werden, dass das zu übertragende Datenvolumen auf einen Höchstwert begrenzt wird. Dadurch wird vermieden, dass mehr Daten übertragen werden, als ein Anwender oder auch der Mobilfunkbetreiber wünscht.

Ein weiteres internes Ereignis, welches die Auslöseeinheit 31 steuert, beruht auf der Speicherkapazität des Bilddatenspeichers 24. Ist der Bilddatenspeicher 24 bis zu einem gewissen Füllstand mit Foto- und/oder Filmdaten 25 gefüllt, wird ein ebenfalls ein Signal 34 erzeugt, welches die ereignisgesteuerte Auslöseeinheit 31 veranlasst, Foto- und/oder Filmdaten 25 an den Server 30 zu übertragen.

Der Server 30 verfügt über eine erheblich größere Speicherkapazität als sich in dem Mobilfunkengerät 14 unterbringen lässt. Die so übertragenen Foto- und/oder Filmdaten 25 werden in einem Server-Speicher 36 gespeichert. Bedarfsorientiert können die Foto- und/oder Filmdaten 25 archiviert und verwaltet werden. Es lässt sich auf diese Weise auch ein Dienst anbieten, der die Bilddaten 25 über einen Drucker 38 ausdruckt und an den Mobilfunkteilnehmer versendet. Ein weiterer Dienst, der sich durch den Server 30 so realisieren lässt, sind Zugriffe auf die Foto- und/oder Filmdaten 25 von einem Computer 40 z.B. über ein Netzwerk, wie das Internet. Die Foto- und/oder Filmdaten 25 können ggf. auch an ein Mobilfunkendgerät 42 eines anderen Mobilfunkteilnehmers, insbesondere als MMS, versendet werden.

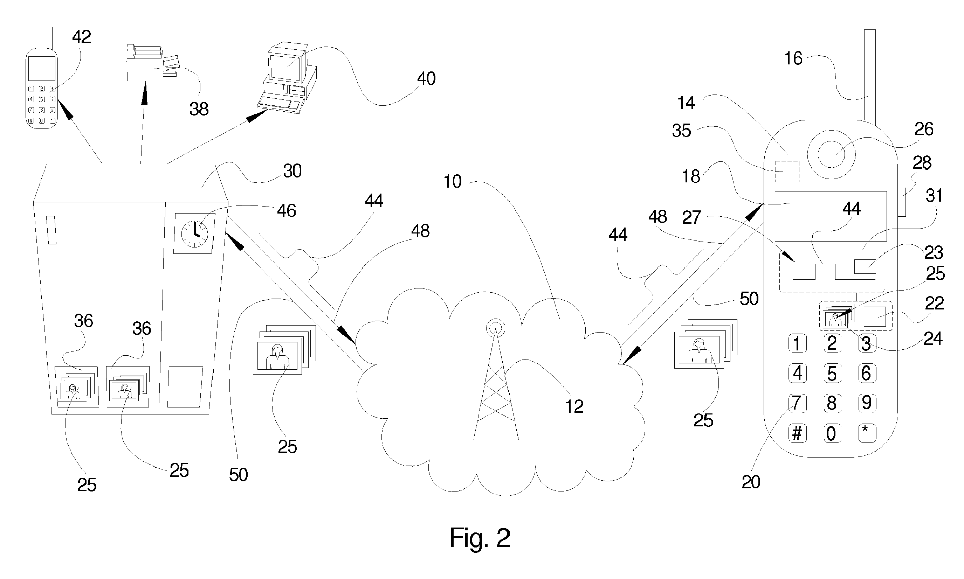

Fig. 2 zeigt entsprechend zu Fig. 1 ein erfindungsgemäßes Mobilfunkendgerät 14, mit welchem über das Mobilfunknetz 10 kommuniziert werden kann. Gleiche Bestandteile werden daher auch mit entsprechenden Bezugszeichen bezeichnet. Im Unterschied zu Fig. 1 wird die ereignisgesteuerte Auslöseeinheit 31 jedoch nicht von einem im Mobilfunkendgerät 14 internen Ereignis gesteuert. Das auslösende Ereignis wird im vorliegenden Ausführungsbeispiel von dem Server 30 erzeugt. Dabei handelt es sich beispielsweise um ein Auslösesignal 44, welches von einem Zeitgeber 46 des Servers 30 generiert wird. Die Zeit lässt sich analog zu Fig. 1 dabei z.B. beispielsweise so einstellen, dass ein besonders günstiger Kommunikationstarif gilt oder eine besonders geringe Auslastung des Mobilfunknetzes vorliegt.

Dieses Auslösesignal 44 wird über das Mobilfunknetz 10 zum Mobilfunkendgerät 14 übertragen, Pfeile 48. Dort erreicht es die ereignisgesteuerte Auslöseeinheit 31 und veranlasst diese die Foto- und/oder Filmdaten 25 zum Server 30 zu versenden, Pfeile 50. Das Auslösesignal 44 kann grundsätzlich von einem beliebigen externen Gerät generiert und auf die beschriebene Weise zur Auslöseeinheit 31 des Mobilfunkendgerät 14 übermittelt werden. Das Auslösesignal 44 kann dabei insbesondere Informationen darüber enthalten, an welches externes Gerät, beispielsweise den Server 30, die Foto- und/oder Filmdaten 25 übertragen werden.

## Patentansprüche

1. Mobilfunkendgerät (14) zur Kommunikation über ein Mobilfunknetz (10), insbesondere nach dem GSM- und UMTS-Standard, enthaltend
a) eine prozessorgesteuerte Verarbeitungseinheit (27) mit einem Speicher (22, 24),
b) eine digitale Fotokamera (26), wobei digitale Fotos und/oder Filme (25), welche mit der Fotokamera (26) generiert werden, in dem Speicher (24) der Verarbeitungseinheit (27) gespeichert werden,
c) Übertragungsmittel (29) zum Austauschen von digitalen Fotos und/oder Filmen (25) über das Mobilfunknetz (10),
**gekennzeichnet durch**
d) eine ereignisgesteuerte Auslöseeinheit (31), welche die Übertragungsmittel (29) veranlasst, die digitalen Fotos und/oder Filme (25) von dem Speicher (24) der Verarbeitungseinheit (27) über das Mobilfunknetz (10) zu einem Empfangsgerät (30) weiterzuleiten.

2. Mobilfunkendgerät (14) zur Kommunikation über ein Mobilfunknetz (10) nach Anspruch 1, **dadurch gekennzeichnet, dass** das Empfangsgerät für die digitalen Fotos und/oder Filme (25) als ein zentraler Server (30) für Fotoverwaltung ausgebildet ist.

3. Mobilfunkendgerät (14) zur Kommunikation über ein Mobilfunknetz (10) nach einem der Ansprüche 1 oder 2, **dadurch gekennzeichnet, dass** die Auslöseeinheit (31) zeitgesteuert ausgebildet ist.

4. Mobilfunkendgerät (14) zur Kommunikation über ein Mobilfunknetz (10) nach einem der Ansprüche 1 bis 3, **dadurch gekennzeichnet, dass** ein Übermittlungsbegrenzer (35) vorgesehen ist, der das Volumen und/oder die Anzahl der zu übertragenen Fotodaten bzw. Fotos (25) begrenzt.

5. Mobilfunkendgerät (14) zur Kommunikation über ein Mobilfunknetz (10) nach einem der Ansprüche 1 bis 4, **dadurch gekennzeichnet, dass** die Auslöseeinheit (31) tarifgesteuert ausgebildet ist, wobei die Fotodaten (25) bei einem bestimmten Tarifwert übermittelt werden.

6. Mobilfunkendgerät (14) zur Kommunikation über ein Mobilfunknetz (10) nach einem der Ansprüche 1 bis 5, **dadurch gekennzeichnet, dass** die Auslöseeinheit (31) Fernsteuerungsmittel (46) enthält, worüber ein externes Fernsteuergerät (30) die Auslöseeinheit (31) über das Mobilfunknetz (10) steuert.

7. Übermittlungsverfahren für ein Mobilfunkendgerät (14) mit Fotokamera (26), zur Übermittlung von digitalen Fotos und/oder Filmen (25) über ein Mobilfunknetz (10), insbesondere nach dem GSM- und UMTS-Standard, mit folgenden Verfahrensschritten:
a) Speichern der von der Fotokamera (26) generierten Fotodaten (25) in einem Datenspeicher (24), welcher im Mobilfunkendgerät (14) angeordnet ist und
b) Übermitteln der Fotodaten (25) an ein Empfangsgerät (30) über das Mobilfunknetz (10),
**dadurch gekennzeichnet, dass**
c) die Fotodaten (25) ereignisgesteuert an das Empfangsgerät (30) übermittelt werden.

8. Übermittlungsverfahren für ein Mobilfunkendgerät (14) mit Fotokamera (26) nach Anspruch 7, **dadurch gekennzeichnet, dass** die Übermittlung der Fotodaten (25) im MMS-Format erfolgt.

9. Übermittlungsverfahren für ein Mobilfunkendgerät (14) mit Fotokamera (26) nach einem der Ansprüche 7 oder 8, **dadurch gekennzeichnet, dass** das Empfangsgerät (30) für die digitalen Fotos (25) als ein zentraler Server ausgebildet ist, der die Fotos verwaltet und/oder weiterverarbeitet.

10. Übermittlungsverfahren für ein Mobilfunkendgerät (14) mit Fotokamera (26) nach einem der Ansprüche 7 bis 9, **dadurch gekennzeichnet, dass** eine zeitgesteuerte Übermittlung der Fotodaten (25) erfolgt.

11. Übermittlungsverfahren für ein Mobilfunkendgerät (14) mit Fotokamera (26) nach einem der Ansprüche 7 bis 10, **dadurch gekennzeichnet, dass** die Auslösung zur Übermittlung der Fotodaten (25) ferngesteuert wird.

12. Übermittlungsverfahren für ein Mobilfunkendgerät (14) mit Fotokamera nach einem der Ansprüche 7 bis 11, **dadurch gekennzeichnet, dass** der Empfang von übermittelten Fotodaten (25) mit einer Kurznachricht bestätigt wird.
